**Europäisches Patentamt**

(19) **European Patent Office**

**Office européen des brevets**

(11) Numéro de publication: **0 138 872**

**B1**

(12) # FASCICULE DE BREVET EUROPÉEN

(45) Date de publication du fascicule du brevet:
26.11.86

(51) Int. Cl.⁴: **F 03 D 7/02**

(21) Numéro de dépôt: **84901084.8**

(22) Date de dépôt: **13.03.84**

(86) Numéro de dépôt international:
**PCT/FR 84/00059**

(87) Numéro de publication internationale:
**WO 84/03738 (27.09.84 Gazette 84/23)**

(54) **DISPOSITIF DE REGULATION D'UNE EOLIENNE COMPORTANT UN PANNEAU DE COMMANDE D'EFFACEMENT BASCULANT SOUS LA COMMANDE D'UN PANNEAU AUXILIAIRE.**

(30) Priorité: **15.03.83 FR 8304202**

(43) Date de publication de la demande:
**02.05.85 Bulletin 85/18**

(45) Mention de la délivrance du brevet:
**26.11.86 Bulletin 86/48**

(84) Etats contractants désignés:
**AT BE DE GB NL SE**

(56) Documents cité:
**BE-A-367 500**
**FR-A-1 011 426**
**FR-A-2 473 642**
**FR-A-2 508 977**

(73) Titulaire: **PROCEDES TECHNIQUES DE CONSTRUCTION, 9, Place des Ternes, F-75848 ParisCedex 17 (FR)**

(72) Inventeur: **D'ABOVILLE, Yanic, 19, avenue du Maréchal Douglas Haig, F-78000 Versailles (FR)**

(74) Mandataire: **Marquer, Francis, CABINET MOUTARD 35, avenue Victor Hugo Résidence Champfleury, F-78180 Voisins- le- Bretonneux (FR)**

EP 0 138 872 B1

LIBER, STOCKHOLM 1986

## Description

L'invention se rapporte aux dispositifs de régulation destiés à limiter, les efforts, l'emballement et la puissance d'une éolienne et, plus particulièrement, d'une éolienne à pales fixes.

L'invention se propose en effet de permettre la réalisation à bon marché d'une éolienne destinée à la production compétitive d'électricité de chauffage, problème qui n'est pas résolu actuellement. Cette réalisation est basée sur l'utilisation, comme capteur, d'une hélice comportant un nombre de pales intérmédiaire entre celui des hélices dites "lentes" et des hélices dites "rapides", à savoir entre 8 et 12 pales. La construction de la roue doit être très simple et les pales ne seront donc ni éclipsables, ni orientables individuellement, ni déformables, ni profilées pour provoquer un décrochage aérodynamique. Il n'est pas question non plus de munir la roue d'un frein ou d'un absorbeur d'énergie continu. Seul l'effacement d'ensemble de la roue en cas de vent trop rapide peut donc être envisagé en pratique.

Par ailleurs, les capteurs-hélices à axe horizontal, que l'on utilisera ici, doivent évidemment être normalement orientés pour faire toujours face au vent. La solution habituelle consiste alors à utiliser un gourvernail articulé qui provoque l'effacement d'ensemble, à partir d'une certaine vitesse du vent. Dans cette solution, l'effacement commence à se manifester bien avant la vitesse limite, ce qui conduit à une perte de rendement.

L'invention se propose d'utiliser une hélice aval d'axe horizontal sans gouvernail et de lui associer un dispositif de régulation de construction simple qui permette d'exploiter completement les vents les plus frequents de (vitesse inférieur a 12 ou 13 m/sec) et de mettre l'hélice en drapeau pour les vents qui dépassent un tel seuil de vitesse, tout en maintenant le plan de l'hélice parfaitement perpendiculaire à la direction du vent en fonctionnement normal.

Suivant l'invention, un tel dispositif est principalement caractérisé en ce qu'il comporte un axe horizontal d'orientation essentiellement parallèle au plan de l'hélice et solidaire de l'arbre de celle-ci; un panneau principal, situé au vent de l'hélice, monté basculant autour dudit axe horizontal, qui partage sa surface en deux moitiés avantageusement sensiblement égales, entre une position sensiblement horizontale et une position sensiblement verticale définies par des butées, ledit panneau principal étant muni, sur sa moitié située au vent lorsqu'il est en position horizontale, de moyens jouant le rôle d'un contrepoids et avantageusement d'un déflecteur, sur la partie supérieure de ladite moitié; un panneau auxiliaire porté par un bras fixé au panneau principal avantageusement sur le dessus de celui-ci, de manière que ledit panneau auxiliaire soit en position essentiellement verticale lorsque le panneau principal est en position horizontale, ledit panneau auxiliaire étant déporté vers ledit axe d'orientation de façon à ne pas se trouver derrière le panneau principal lorsque celui-ci est en position verticale, l'agencement étant tel que, pour un vent inférieur à une première vitesse prédéterminée, le panneau principal est stabilisé en position horizontale par l'effet du contrepoids et de la poussée du vent sur le déflecteur tandis que, lorsque cette première vitesse est dépassée, la poussée du vent sur le panneau auxiliaire soit suffisante pour faire basculer le panneau principal en position verticale, dans laquelle la poussée que le vent exerce sur le panneau principal est elle-même suffisante pour effacer l'hélice.

Le dispositif de régulation, objet de l'invention, peut facilement être utilisé pour effectuer une mise en drapeau volontaire de l'hélice, indépendante de la régulation automatique par la vitesse du vent.

A cet effet, suivant une particularité de l'invention, ledit axe horizontal est constitué par un tube qui sert de moyen de guidage à un câble fixé au panneau principal, de manière telle qu'une traction exercée sur ce câble ait pour effet de relever ledit panneau principal en position verticale.

La traction sur le câble peut être exercée, soit manuellement, soit, suivant une autre particularité de l'invention, au moyen d'un dispositif limiteur de vitesse, agence pour coopérer avec l'arbre de l'hélice et exercer une traction sur ledit câble de commande de relevage dès que la vitesse dudit arbre dépasse un seuil prédéterminé.

Les diverses particularités, ainsi que les avantages de l'invention, apparaitront clairement è la lumière de la description ci-après.

Au dessin annexé:

La figure 1 représente schématiquement, vu en élévation, un aérogénérateur muni d'un dispositif conforme a un mode d'exécution préféré de l'invention, avec son hélice en position effacée;

La figure 2 représente schématiquement le même aérogénérateur, vu de profil avec l'hélice face au vent;

La figure 3 montre la partie essentielle du dispositif de regulation et d'orientation de l'hélice, en vue latérale, lorsque l'hélice est face au vent;

La figure 4 montre le même dispositif, déflecteur enlevé, vu de bout alors que l'hélice est face au vent, et;

La figure 5 est une vue de dessus du dispositif alors que l'hélice est face au vent.

Les mêmes numéros de référence désignent des éléments homologues aux diverses figures.

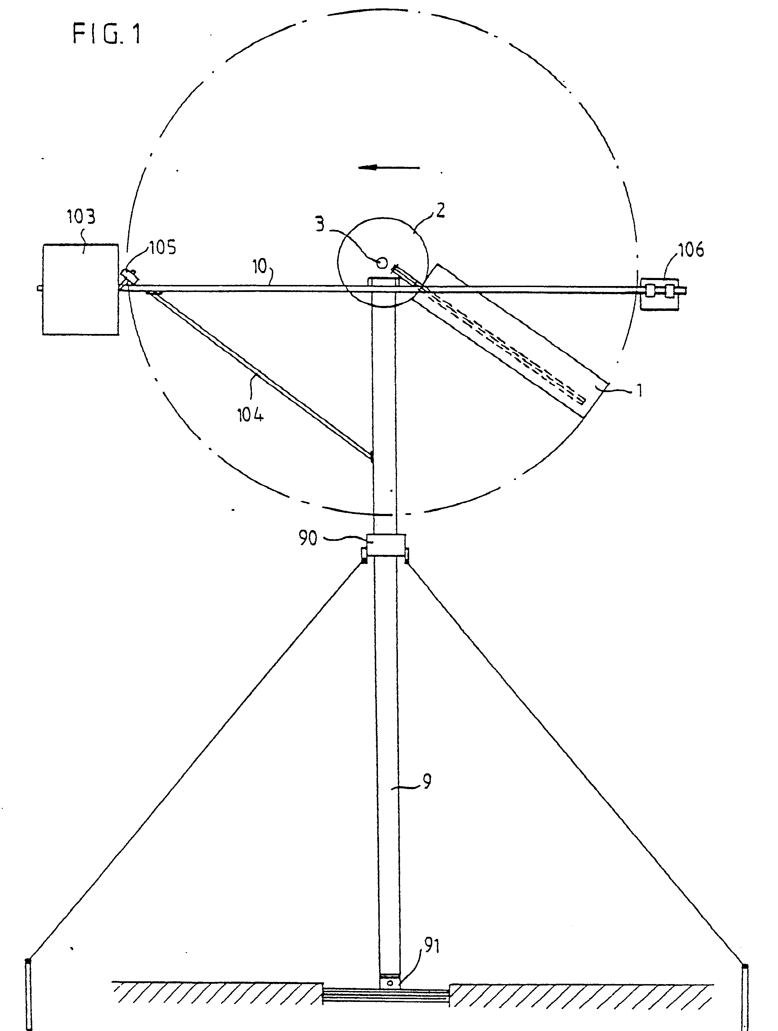

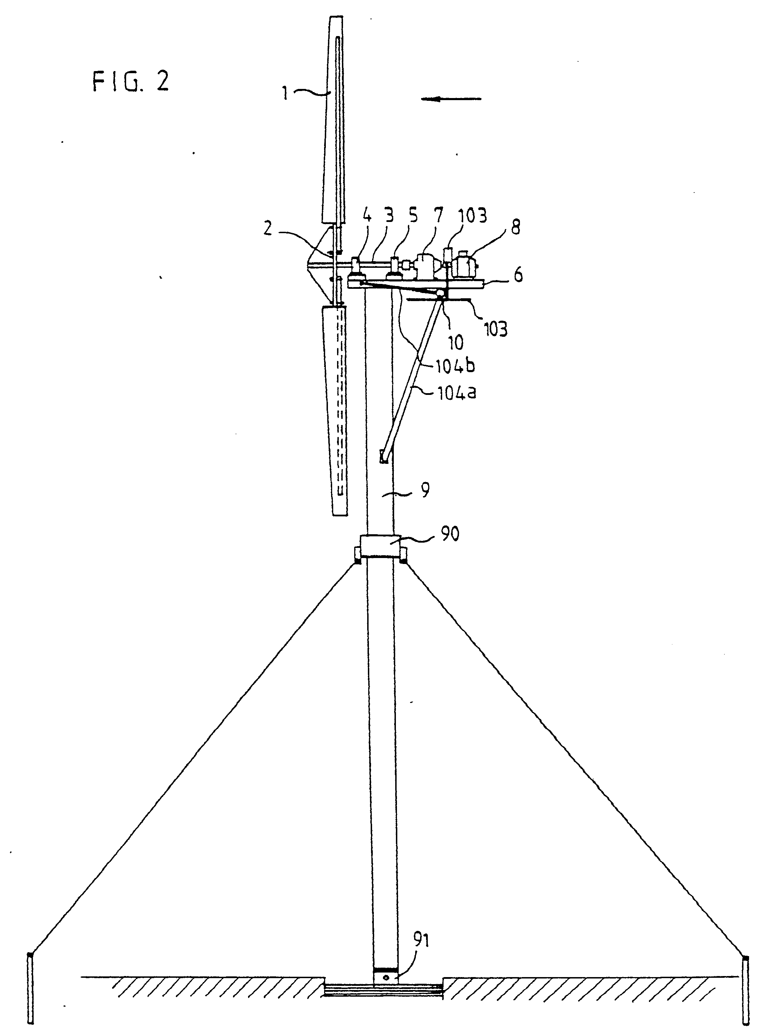

Aux figures 1 et 2, on a représenté un aérogénérateur comportant une hélice ayant, à titre d'exemple, dix pales 1 fixées sur un moyeu 2 soudé sur un arbre 3. Cet arbre est supporté par des paliers à roulement 4-5 montés sur une plateforme 6 qui supporte un multiplicateur 7 et un alternateur 8.

Cette plateforme est fixée au sommet d'un mât tournant 9. Celui-ci est muni d'une couronne de haubannage 90 et d'un pied 91 monté sur roulements.

Autour d'un axe tubulaire horizontal 10 sensiblement parallèle au plan de l'hélice peut basculer, sur deux roulements étanches 101-102, un panneau 103.

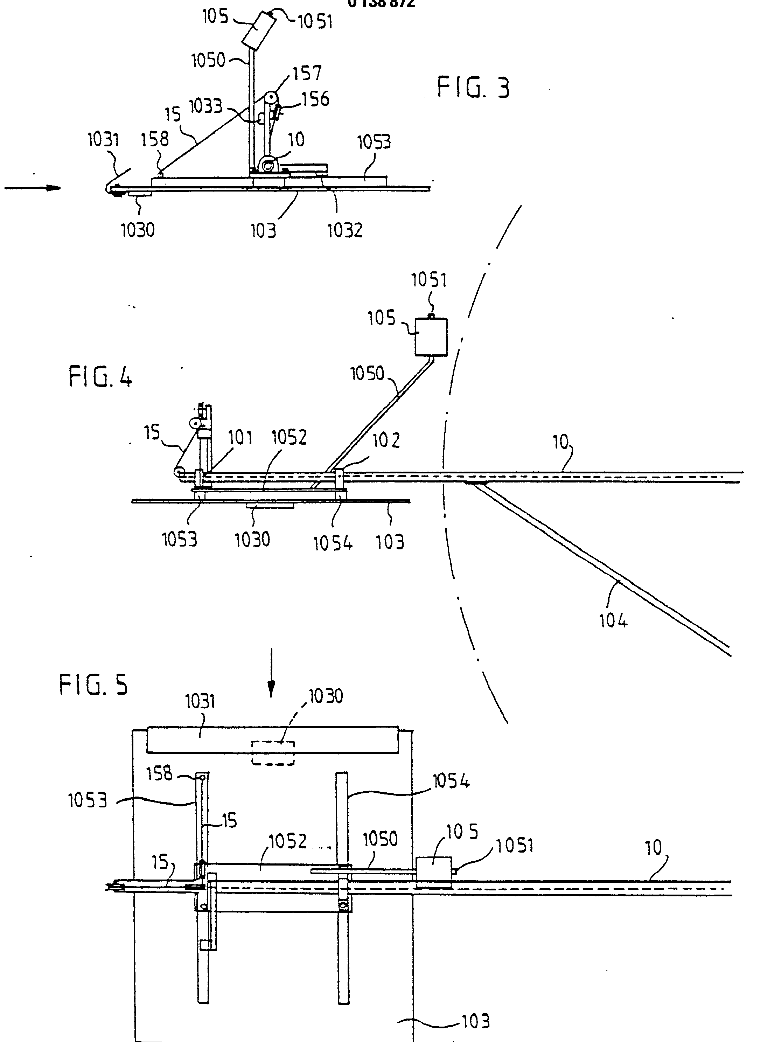

Ce panneau est représenté plus en détail, en position horizontale, vu latéralement à la figure 3 (où la direction du vent est indiquée par une flèche) et en bout, face au vent, à la figure 4. A la figure 5, il est vu de dessus, et la direction du vent est également indiquée par une flèche. L'axe 10 est fixé à la plate-forme et solidarisé au mât 9, auquel le relient deux jambes de force 104a et 104b.

Comme montre la figure 5, les deux parties du panneau définies par l'axe de basculement ont de préférence des surfaces égales, mais la moitié avant, c'est-à-dire celle qui est au vent à la figure 3, est équipée d'un contrepoids 1030 ou moyen équivalent. Elle est en outre munie, sur sa face supérieure, d'un déflecteur 1031.

Le panneau 103 a une surface égale environ au 1/30ème de celle balayée par l'hélice. Comme le montre la figure 1, il est à l'extérieur de cette surface et au vent de celle-ci à une distance suffisante pour qu'il soit à l'abri de ses turbulences.

Au dessus du panneau 103 lorsqu'il est en position horizontale, est monté un panneau auxiliaire 105, porté par la portion terminale 1051 d'une tige 1050 inclinée par rapport à l'horizontale et située dans un plan vertical parallèle à l'arbre 10 et voisin de celui-ci. La tige 1050 est fixée à une traverse d'armature horizontale 1052 elle-même fixée au panneau 103 par deux tubes carrés 1053-1054.

On voit (figures 3 à 5) que le panneau auxiliaire 105, lorsque le panneau principal 103 est en position horizontale, est lui-même en position essentiellement verticale, avec toutefois, une double incidence par rapport au vent.

A l'autre extrémité de l'axe 10 est monté basculant un panneau d'équilibrage 106, ce panneau coopère avec une butée, non figurée, qui le maintient normalement en position verticale. La surface de sa partie inférieure située au dessous de l'axe est nettement plus importante que celle de sa partie supérieure.

Tant que la vitesse du vent reste inférieure à 12 m/sec par exemple, le panneau principal 103 reste à l'horizontale. La poussée du vent sur l'ensemble de la structure 10-104-103-105 est équilibrée, à l'autre extrémité de l'axe 10, par le panneau 106. Le panneau 103 est stabilisé par le contrepoids et par la composante verticale de la poussée du vent sur le déflecteur 1031.

L'hélice est normale au vent et tourne.

Le panneau auxiliaire, soumis à la poussée du vent, exerce un moment de basculement M, croissant en fonction de la vitesse du vent sur le panneau principal (dans le sens dextrorsum, figure 3), tandis que le déflecteur exerce un moment antagoniste $m_1$ également croissant et le contrepoids, un moment antagoniste constant $m_2$.

L'agencement est tel que, pour un vent de vitesse superieure à 12 m/sec par exemple $M > m_1 + m_2$, si bien que la structure 103-105 bascule alors jusqu'à une position verticale du panneau 103. La poussée du vent qui s'exerce sur le panneau 105 en position verticale est alors suffisante pour faire tourner l'axe 10 et le mât 9 qui est en solidaire, jusqu'à une position (représentée à la figure 1) où l'hélice est plus ou moins complètement effacée, d'où un ralentissement pouvant aller jusqu'à l'arrêt.

L'axe horizontal 10 pourra être légèrement incliné dans le plan horizontal par rapport au plan de l'hélice, ceci afin de faire varier l'angle d'effacement, donc la vitesse de l'hélice en position effacée.

On notera que, lorsque le panneau principal est en position verticale, le panneau auxiliaire n'est pas masqué par le panneau principal par rapport au vent (grâce à son déport, visible à la figure 1).

Tant que la vitesse du vent reste superieure a environ 11 m/sec par exemple, l'effacement persistera. En effet, le panneau auxiliaire, alors en position essentiellement horizontale, possède cependant une première inclinaison, visible à la figure 3, telle que la poussée du vent comporte une composante verticale, dirigée vers le bas, et cette dernière sera suffisante pour maintenir le bras 1050 à l'horizontale, donc le panneau 103 relevé.

En deçà de cette vitesse de 11 m/sec, le panneau principal est ramené, du fait de son montage en porte-à-faux, en position horizontale, ce qui permet au couple d'auto-orientation de l'hélice de la ramener face au vent.

S'il se produit que, emporté par son élan, l'hélice s'efface de plus de 90° (position de contre-orientation), ayant ainsi tendance à se mettre à tourner en sens inverse, l'orientation du panneau auxiliaire est alors telle (seconde inclinaison, visible à la figure 3) que la poussée du vent sur lui ait une composante dirigée vers le bas, ce qui a pour effet de maintenir le panneau principal relevé: dans cette position, la poussée du vent sur le panneau principal ramène l'hélice dans sa position normale.

Lorsque le panneau principal est à l'horizontale, l'hélice peut aussi avoir tendance à se déplacer en contre-orientation, sous l'effet de changements brefs de la direction du vent. Dans ce cas, le moment engendré par la poussée du vent sur la structure du dispositif d'effacement et, en particulier, sur l'arrière non aérodynamique du déflecteur, a pour effet de renvoyer l'hélice en position normale. En effet, dans cette orientation, le panneau d'équilibrage 106 bascule sous la poussée du vent et n'offre alors pas de résistance au retour à la position normale.

On notera que des butées, 1032-1033, équipées de dispositifs d'amortissement, limitent le basculement du panneau principal à proximité des positions horizontale et verticale.

En définitive, le dispositif de régulation et d'orientation que l'on vient de décrire, de construction robuste, fiable et peu onéreuse, met l'hélice en drapeau lorsque le vent atteint par exemple, environ 12/13 m/sec. et la laisse reprendre sa position normale par exemple, aux environs de 10/11 m/sec. En dessous de cette vitesse, et contrairement aux dispositifs d'effacement progressif utilisant la poussée du vent, il conserve normalement un plan de l'hélice parfaitement perpendiculaire à la direction du vent, donc maintient la pleine puissance de l'aérogénérateur.

Avantageusement, le dispositif de régulation que l'on vient de décrire est associé à un limiteur de vitesse, lequel est de préférence du type décrit dans la demande de brevet WO-A-84/03739 déposée le même jour par la Demanderesse pour: "Dispositif à force centrifuge limiteur de la vitesse de rotation de l'arbre du capteur d'une éolienne, et moyens d'arrêt et de blocage dudit capteur associés à un tel dispositif"

Le limiteur, dès que la vitesse de rotation de l'arbre 3 dépasse un seuil pré-déterminé, exerce une traction sur un câble. Ce câble a été représenté en 15 au dessin; il est guidé, à partir du limiteur monté sur la plateforme 6, à l'intérieur de l'arbre 10, qui est tubulaire et aboutit, après guidage sur des poulies 156, 157, à un point de fixation 158 sur le panneau 103, de telle façon que la traction exercée sur le câble relève le panneau, provoquant ainsi l'effacement.

On voit que la structure du dispositif régulateur se prête particulièrement bien à sa coopération avec un tel limiteur de vitesse.

### Revendications

1. Dispositif de regulation d'une hélice d'éolienne, du type à pas fixe et auto-orientable sans gouvernail, dont l'arbre (3), sensiblement horizontal, est monté orientable sur un axe vertical d'orientation (9),
caractérisé en ce qu'il comporte un axe horizontal (10) essentiellement parallèle au plan de l'hélice et solidaire dudit arbre (3); un panneau principal, situé au vent de l'hélice (103), monté basculant autour dudit axe horizontal (10), qui partage sa surface en deux moitiés avantageusement sensiblement égales, entre une position sensiblement horizontale et une position sensiblement verticale définies par des butées (1032-1033), ledit panneau principal (103) étant muni, sur sa moitié située au vent lorsqu'il est en position horizontale, d'un moyen jouant le rôle d'un contrepoids (1030) et, avantageusement, d'un déflecteur sur la partie supérieure de ladite moitié (1031); un panneau auxiliaire (105) porté par un bras (1050-1051) fixé au panneau principal (103) de préférence sur le dessus de celui-ci, de manière que ledit panneau auxiliaire soit en position essentiellement verticale lorsque le panneau principal est en position horizontale, ledit panneau auxiliaire étant déporté vers ledit axe d'orientation (9) de façon à ne pas se trouver derrière le panneau principal (103) lorsque celui-ci est en position verticale, l'agencement étant tel que, pour un vent inférieur à une première vitesse prédéterminée, le panneau principal est stabilisé en position horizontale par l'effet du contrepoids et de la poussée du vent sur le déflecteur tandis que, lorsque cette première vitesse est dépassée, la poussée du vent sur le panneau auxiliaire soit suffisante pour faire basculer le panneau principal en position verticale, dans laquelle la poussée que le vent exerce sur le panneau principal est elle-même suffisante pour effacer l'hélice.

2. Dispositif de régulation selon la revendication 1, caractérisé en ce que le panneau auxiliaire (105) est fixe de manière à se trouver, lorsque le panneau principal (103) est en position verticale, en position essentiellement horizontale avec une première incidence telle que la poussée que le vent exerce sur lui maintienne le panneau principal en position verticale tant que le vent reste supérieur à une seconde vitesse prédéterminée plus faible que la première.

3. Dispositif de régulation selon la revendication 2, caractérisé en ce que le panneau auxiliaire (105) présente, lorsqu'il est en position essentiellement horizontale, une seconde incidence telle que, si l'hélice a tendance à se mettre en contre-orientation en s'effaçant de plus de 90°, la poussée du vent sur ledit panneau auxiliaire ait pour effet de maintenir le panneau principal (103) en position verticale.

4. Dispositif de régulation selon l'une des revendications 1 à 3, caractérisé par un panneau d'équilibrage (106), monté basculant sur ledit axe horizontal (10) en un point situé, par rapport au panneau principal (103), de l'autre côté dudit axe vertical d'orientation (9) et agencé pour équilibrer la poussée du vent sur l'ensemble constitué par le panneau principal (103) et le panneau auxiliaire (105), lorsque le panneau principal est en position horizontale, ledit panneau d'équilibrage coopérant avec une butée qui le maintient normalement en position verticale.

5. Dispositif de régulation selon la revendication 1, caractérisé en ce que ledit axe horizontal (10) est légèrement incliné par rapport au plan de l'hélice.

6. Dispositif de régulation selon la revendication 6, caractérisé en ce que ledit axe horizontal (10) est constitué par un tube qui sert de moyen de guidage à un câble (15) fixé au panneau principal (103), de manière telle qu'une traction exercée sur ce câble ait pour effet de relever ledit panneau principal (103) en position verticale.

7. Dispositif de régulation selon la revendication 6, caractérisé en ce qu'il est associé à un dispositif limiteur de vitesse, agencé pour coopérer avec l'arbre (3) de l'hélice et exercer une traction sur ledit câble (15) de commande de relevage dès que la vitesse dudit arbre (3) dépasse un seuil prédéterminé.

## Patentansprüche

1. Einstellvorrichtung für einen Windturbinenpropeller des Typs mit gleichbleibender Steigung und Selbsteinstellung ohne Steuer, dessen im wesentlichen waagerechter Schaft (3) orientierbar auf eine senkrechte Orientierungsachse (9) montiert ist, dadurch gekennzeichnet dass zu ihm eine waagerechte Achse (10) gehört, die im wesentlichen parallel zur Ebene des Propellers und mit besagten Schaft (3) fest verbunden ist eine Hauptplatte (103), die sich im Turbinenwind befindet und um besagte waagerechte Achse (10) welche ihre Oberfläche in zwei, vorteilhafterweise im wesentlichen gleiche, Hälften teilt, so montiert ist, dass sie zwischen einer im wesentlichen waagerechten und einer im wesentlichen senkrechten Stellung, die durch Anschläge (1032-1033) begrenzt werden, gekippt werden kann, wobei besagte Hauptplatte (103) auf ihrer Hälfte, die sich im Winde befindet, wenn sie die waagerechte Stellung eingenommen hat, mit einem Mittel versehen ist, das die Rolle eines Gegengewichtes (1030) spielt und vorteilhafterweise mit einem Deflektor im oberen Teil der besagten Hälfte (1031); einer Hilfsplatte (105), die von einem Schenkel (1050-1051) getragen wird, welcher auf der Hauptplatte (103) vorzugsweise auf deren oberer Seite, befestigt ist, sodass besagte Hilfsplatte sich in einer im wesentlichen senkrechten Stellung befindet, wenn die Hauptplatte die waagerechte Stellung einnimmt, und besagte Hilfsplatte gegen besagte Orientierungsachse (9) verschoben wird, um sich nicht hinter der Hauptplatte (103) zu befinden, wenn diese die senkrechte Stellung einnimmt, wobei die Anordnung so beschaffen ist, dass bei einem Wind, der nicht eine erste vorbestimmte Geschwindigkeit erreicht, die Hauptplatte durch das Gegengewicht und den Winddruck auf den Deflektor in der waagerechten Stellung gehalten wird, während, wenn diese erste Geschwindigkeit überschritten wird, der Winddruck auf die Hilfsplatte genügt um die Hauptplatte in die senkrechte Stellung zu kippen, in der der Winddruck auf die Hauptplatte genügt, um den Propeller zurückzustellen.

2. Einstellvorrichtung nach Anspruch 1, dadurch gekennzeichnet, dass die Hilfsplatte (105) so befestigt ist, dass sie sich, wenn die Hauptplatte (103) sich in der senkrechten Stellung befindet, im wesentlichen in der waagerechten Stellung befindet, mit einem ersten Anstellwinkel, der so beschaffen ist, dass der auf besagte Platte ausgeübte Winddruck die Hauptplatte in der senkrechten Stellung hält, solange der Wind eine zweite vorbestimmte Geschwindigkeit überschreitet, die geringer ist, als die erste.

3. Einstellvorrichtung nach Anspruch 2, dadurch gekennzeichnet, dass die Hilfsplatte (105), wenn sie sich in der im wesentlichen waagerechten Stellung befindet, einen zweiten so beschaffenen Anstellwinkel bildet, dass, wenn der Propeller dazu neigt, sich in Gegenorientierung zu begeben, indem er sich um mehr als 90° rückstellt, der Winddruck auf besagte Hilfsplatte zur Folge hat, dass die Hauptplatte (103) in der senkrechten Stellung gehalten wird.

4. Einstellvorrichtung nach einem der Ansprüche 1 bis 3, gekennzeichnet durch eine Ausgleichsplatte (106), die auf besagte waagerechte Achse (10) kippbar an einer Stelle montiert ist, die sich im Verhältnis zur Hauptplatte (103) auf der anderen Seite der besagten senkrechten Orientierungsachse (9) befindet und so angelegt ist, dass der Winddruck auf die von der Haupt- (103) und Hilfsplatte (105) gebildete Einheit ausgeglichen wird wenn die Hauptplatte sich in der waagerechten Stellung befindet wobei besagte Ausgleichsplatte mit einem Anschlag zusammenarbeitet der sie normalerweise in der senkrechten Stellung hält.

5. Einstellvorrichtung nach Anspruch 1, dadurch gekennzeichnet, dass besagte waagerechte Achse (10) im Verhältnis zur Propellerebene leicht geneigt ist.

6. Einstellvorrichtung nach Anspruch 5, dadurch gekennzeichnet, dass besagte waagerechte Achse (10) durch ein Rohr gebildet wird, das als Führung für ein Kabel (15) dient, das an der Hauptplatte (103) so befestigt ist, dass ein Zug an besagtem Kabel besagte Hauptplatte (103) in die senkrechte Stellung aufrichtet.

7. Einstellvorrichtung nach Anspruch 6, dadurch gekennzeichnet, dass sie einer Geschwindigkeitsbegrenzungsvorrichtung zugeordnet ist, die mit dem Propellerschaft (3) zusammenarbeitet und auf besagtes Kabel (15), das die Aufrichtung steuert, einen Zug ausübt, sobald die Geschwindigkeit des besagten Schaftes (3) einen vorbestimmten Schwellenwert überschreitet.

## Claims

1. Device for regulating a wind turbine of the fixed-pitch and self-orientatable type without helm, the substantially horizontal shaft (3) of which is mounted orientatable on a vertical orientation axis (9), characterized in that it comprises a horizontal axis (10) substantially parallel to the propeller plane and integral with said shaft (3); a main panel disposed in the propeller(103) wind, and mounted for pivoting about said horizontal axis (10) which divides its surface into two advantageously substantially equal halves, between a substantially horizontal position and a substantially vertical position delimited by stops (1032 - 1033), said main panel (103) being provided, on its half disposed in the wind when it is in its horizontal position, with a means playing the role of a counterweight (1030) and, advantageously, with a deflector on the upper part of said half (1031); an auxiliary panel (105) carried by an arm (1050 - 1051) fixed to the main panel (103), preferably on the upper surface thereof, so that said auxiliary panel is in a substantially vertical position when the main panel is in the horizontal position, said auxiliary panel being shifted towards said orientation axis (9), in order not to be situated behind the main panel (103), when this latter is in the vertical position, the arrangement being such that, for a wind below a predetermined speed, the main panel is held in the horizontal position by means of the counterweight and the thrust of the wind on the deflector, whereas, when this first speed is exceeded, the thrust of the wind on the auxiliary panel is sufficient to pivot the main panel into the vertical position, in which the thrust of the wind exerted on the main panel is itself sufficient to retract the propeller.

2. Regulating device according to claim 1, characterized in that the auxiliary panel (105) is fixed so as to be situated when the main panel (103) is in the vertical position, in a substantially horizontal position with a first incidence such that the thrust of the wind exerted thereon maintains the main panel in the vertical position as long as the wind exceeds a second predetermined speed less than the first one.

3. Regulating device according to claim 2, characterized in that the auxiliary panel (105) has, when it is in a substantially horizontal position, a second incidence such that when the propeller tends to place itself in counter-orientation by retracting by more that 90°, the thrust of the wind on said auxiliary panel results in maintaining the main panel (103) in the vertical position.

4. Regulating device according to one of claims 1 to 3, characterized by an equilibration panel (106) mounted for pivoting on said horizontal axis (10) at a point located, with reference to the main panel (103), at the other side of said vertical orientation axis (9) and adapted for equilibrating the wind thrust on the assembly formed by the main panel (103) and the auxiliary panel (105) when the main panel is in the horizontal position, said equilibration panel cooperating with a stop which maintains it normally in the vertical position.

5. Regulating device according to claim 1, characterized in that said horizontal axis (10) is slightly inclined with respect to the propeller plane.

6. Regulating device according to claim 6, characterized in that said horizontal axis (10) is formed by a pipe serving as a guide means for a cable (15) fixed to the main panel (103) in such a way that a pull exerted on said cable results in lifting the main panel (103) to the vertical position.

7. Regulating device according to claim 6, characterized in that it is associated to a speed-limiting device adapted for cooperating with the propeller shaft (3) and exerting a pull on said cable (15) for controlling the lift when the speed of said shaft (3) exceeds a predetermined threshold.

FIG.1

0 138 872

FIG. 2

FIG. 3

FIG. 4

FIG. 5

5